# EUROPÄISCHE PATENTSCHRIFT

(11) **EP 1 247 667 B1**
(45) Veröffentlichungstag und Bekanntmachung des Hinweises auf die Patenterteilung: **29.07.2009**
(21) Anmeldenummer: 02005099.3
(22) Anmeldetag: 07.03.2002
(51) Int. Cl.: B60H 1/00

(54) **Strömungsklappe**
Air flow damper
Clapet d'écoulement d'air

(30) Priorität: 06.04.2001 DE 10118497
(43) Veröffentlichungstag der Anmeldung: 09.10.2002
(73) Patentinhaber: Behr GmbH & Co. KG, 70469 Stuttgart (DE)
(72) Erfinder: Komowski, Michael, Dipl.-Ing., 70619 Stuttgart (DE)
(74) Vertreter: Grauel, Andreas

(56) Entgegenhaltungen:
- DE-A- 3 510 991
- DE-C- 3 826 182
- DE-C- 19 734 145

## Beschreibung

Die Erfindung betrifft eine Heizungs- und/oder Klimaanlage eines Kraftfahrzeugs, mit einem Strömungskanalabschnitt und einer Strömungsklappe mit wenigstens einem Klappenflügel, der einem Strömungsdurchtritt zugeordnet ist, sowie mit Führungsmitteln zur Verlagerung des Klappenflügels zwischen einer den Strömungsdurchtritt verschließenden Schließposition und wenigstens einer Öffnungsposition.

Aus der EP 0 732 231 B1 ist eine Strömungsklappe für eine Heizungs- und/oder Klimaanlage eines Kraftfahrzeugs bekannt, bei der eine Strömungsklappe in unmittelbarer Nähe eines Gebläses durch Führungsmittel in einer kombiniert translatorischrotatorischen Bewegung geführt ist. Dadurch wird die Strömungsklappe bei ihrer Bewegung ständig sehr nah am Gebläse entlangbewegt, wodurch die anschließenden Luftansaugkanäle unmittelbar im Gebläsebereich enden können. Hierdurch wird ein äußerst strömungsgünstiger Übergang zwischen Luftansaugkanälen und Gebläsebereich erzielt.

Ferner ist aus der DE 197 34 145 C1 eine Klimaanlage nach dem Oberbegriff des Anspruchs 1 bekannt.

Aufgabe der Erfindung ist es, eine Heizungs- und/oder Klimaanlage mit einer Strömungsklappe der eingangs genannten Art zu schaffen, die eine weitgehend geräusch-Steuerung der Strömung des entsprechenden Strömungsmediums, vorzugsweise Luft, ermöglicht.

Diese Aufgabe wird dadurch gelöst, dass die Führungsmittel den Klappenflügel derart verlagern, dass der Klappenflügel in jeder Öffnungsposition im wesentlichen parallel zur vorbeiströmenden Strömung ausgerichtet ist. Durch die erfindungsgemäße Lösung wird der Klappenflügel derart verstellt, dass er zumindest in wenigstens einer Öffnungsposition ein nahezu laminares Vorbeiströmen des entsprechenden Mediumstromes ermöglicht. Die Erfindung geht von der Erkenntnis aus, dass Geräuschbildungen im Strömungsklappenbereich durch Verwirbelungen der Luftströmung erzielt werden. Durch die spezielle erfindungsgemäße Führung und Verstellung der Bewegung des Klappenflügels werden derartige Verwirbelungen und Turbulenzen der Luftströmung zumindest weitgehend vermieden, wodurch die gewünschte, äußerst geräuscharme Verstellung und Positionierung der Strömungsklappe erzielt wird. Die erfindungsgemäße Lösung eignet sich für eine Klimatisierungseinrichtung eines Kraftfahrzeugs, d.h. ein Heizungs- und/oder Belüftungsund/oder Klimaanlage eines Kraftfahrzeugs.

In Ausgestaltung der Erfindung ist der Klappenflügel in seiner Form an Verlauf und Form von Wandungen des Strömungskanalabschnittes im Bereich des Strömungsdurchtrittes angepasst. Diese Ausgestaltung ist insbesondere vorteilhaft, falls der Strömungskanalabschnitt im Bereich des Strömungsdurchtrittes gekrümmt ist. Durch die Anpassung der Krümmung des Klappenflügels an die Krümmung des Strömungskanalabschnittes kann der Klappenflügel auch während seiner Öffnungsbewegung in etwa parallel zur Strömung geführt werden.

In weiterer Ausgestaltung der Erfindung ist der Klappenflügel um eine in Abstand zu den Klappenflügeln angeordnete Schwenkachse schwenkbeweglich gelagert, und der Klappenflügel ist mittels einer Trägeranordnung mit der Schwenkachse verbunden.

Vorzugsweise schafft die Trägeranordnung eine starre Verbindung zwischen Klappenflügel und Schwenkachse, so dass der Klappenflügel einschließlich der Trägeranordnung schwenkbeweglich um die Schwenkachse gelagert ist. Dadurch, dass die Schwenkachse in Abstand zu dem Klappenflügel angeordnet ist, ist für den Klappenflügel ein größerer Schwenkradius erzielbar als dies bei direkt am Klappenflügel angeordneter Schwenkachse der Fall wäre. Vorzugsweise ist der Abstand der Schwenkachse zum Klappenflügel wenigstens so groß wie die Dimensionierung des Klappenflügels selbst - auf die Schwenkebene bezogen. Je größer der Schwenkradius ist, umso eher wird die entsprechende Öffnungs- oder Schließbewegung des Klappenflügels einer translatorischen Bewegung, d.h. einer Parallelverlagerung, angenähert. Dies insbesondere auch deswegen, weil mit der Vergrößerung des Abstandes der Schwenkachse zum Klappenflügel zwangsläufig auch der maximale Schwenkwinkel, um den der Klappenflügel innerhalb des Strömungskanalabschnittes bewegt werden kann, immer geringer wird.

In weiterer Ausgestaltung der Erfindung ragt die Trägeranordnung in Verlängerung der Kontur der Klappenflügelfläche ab. Dadurch befindet sich auch die Schwenkachse in Verlängerung der Kontur der Klappenflügelfläche. Bei ausreichendem Abstand der Schwenkachse zur Klappenflügelfläche kann innerhalb des Strömungskanalabschnittes eine zur Schließposition im wesentlichen parallele Verlagerung des Klappenflügels in verschiedene Öffnungspositionen erzielt werden.

In weiterer Ausgestaltung der Erfindung ist die Trägeranordnung durch mehrere zueinander beabstandete Rippen gebildet, die in einen um die Schwenkachse gelagerten Wellenfortsatz münden. Durch die so entstehenden Zwischenräume zwischen den Rippen ist eine weitgehend unbeeinträchtigte Durchströmung möglich. Falls die Rippen, die vorzugsweise zueinander parallel ausgerichtet sind, zusätzlich noch ein strömungsgünstiges Profil aufweisen, ist die Umströmung dieser Rippen weiter verbessert.

In weiterer Ausgestaltung der Erfindung ist dem Klappenflügel im Bereich der Schwenkachse ein weiterer Klappenabschnitt für einen weiteren Strömungsdurchtritt zugeordnet. Hierdurch wird eine Doppelklappe geschaffen, wobei der weitere Klappenabschnitt sowohl entsprechend einem erfindungsgemäßen Klappenflügel als auch entsprechend einem üblichen und an sich bekannten Klappenflügel gestaltet sein kann.

In weiterer Ausgestaltung der Erfindung ist der weitere Klappenabschnitt gemäß der Kontur des flankierenden Strömungskanalabschnittes gekrümmt. Hierdurch ist auch für den weiteren Klappenabschnitt eine äußerst strömungsgünstige Gestaltung möglich, die eine geräuscharme Umströmung ermöglicht.

In weiterer Ausgestaltung der Erfindung sind der oder die Klappenflügel einschließlich Trägeranordnung und Wellenfortsatz als einstückiges Bauteil, insbesondere aus Kunststoff hergestellt. Dies ist eine besonders einfach und kostengünstig herzustellende Ausgestaltung.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in schematischer Schnittdarstellung eine Ausführungsform einer erfindungsgemäßen Strömungsklappe, die innerhalb einer Fahrzeugklimatisierungseinrichtung angeordnet ist.
- Fig.2: in perspektivischer Darstellung die Strömungsklappe nach Fig. 1,
- Fig. 3 bis 6: die Strömungsklappe nach den Fig. 1 und 2 in verschiedenen Öffnungs- und Schließpositionen,
- Fig. 7: eine Ausführungsform einer Strömungsklappe innerhalb einer Fahrzeugklimatisierungseinrichtung, wobei die Strömungsklappe als Doppelklappe ausgeführt ist.
- Fig. 8: die Strömungsklappe nach Fig. 7 in verschiedenen Schließ- und Öffnungspositionen,
- Fig. 9 bis 11: die Strömungsklappe nach den Fig. 7 und 8 in verschiedenen Schließ- und Öffnungspositionen,
- Fig. 12: eine weitere Ausführungsform einer erfindungsgemäßen Strömungsklappe für eine Fahrzeugklimatisierungseinrichtung, die mit einem Klappenflügel und mit einem weiteren Klappenabschnitt versehen ist,
- Fig. 13: bis 16 die Strömungsklappe nach Fig. 12 in unterschiedlichen Öffnungs- und Schließpositionen,
- Fig. 17: die Strömungsklappe nach den Fig. 7 bis 10 in perspektivischer Darstellung und
- Fig. 18: die Strömungsklappe nach den Fig. 12 bis 16 ebenfalls in perspektivischer Darstellung.

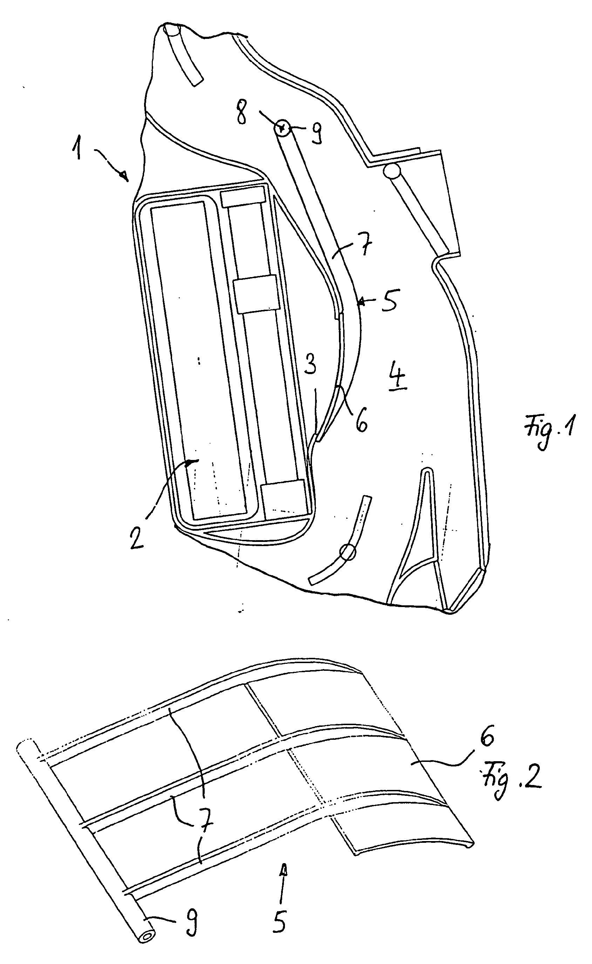

Eine Heizungs- und/oder Klimaanlage für ein Kraftfahrzeug nach den Fig. 1 und 3 bis 6 weist ein Klimatisierungsgehäuse 1 auf, in dem wenigstens eine Wärmeübertrageranordnung 2 untergebracht ist. Ausgangsseitig des Gehäuseabschnittes, der die Wärmeübertrageranordnung 2 umfasst, ist ein Strömungsdurchtritt 3 vorgesehen, der in einen Strömungskanalraum 4 mündet. Vom Strömungskanalraum 4 aus sind mehrere, nicht näher bezeichnete Austrittskanäle abgezweigt, die zu entsprechenden Austrittsdüsen im Fahrzeuginnenraum führen. Der Strömungsdurchtritt 3 von der Wärmeübertrageranordnung 2 aus in den Strömungskanalraum 4 ist entsprechend der Wandung des Strömungskanalraumes 4 gekrümmt gestaltet. Der Strömungsdurchtritt 3 ist durch eine Strömungsklappe 5 verschließbar, die einen Klappenflügel 6 aufweist, der entsprechend der Krümmung des Strömungsdurchtrittes 3 konkav gekrümmt ist. Wie anhand der Fig. 2 erkennbar ist, weist der Klappenflügel 6 neben seiner etwa konkav gekrümmten Form eine rechteckige Gestalt auf. Rückseitig sind an dem Klappenflügel 6 drei Tragrippen 7 angeformt, die eine Trägeranordnung im Sinne der Erfindung bilden. Die Tragrippen 7 sind etwa in Verlängerung des Klappenflügels 6 - auf die Schließfläche des Klappenflügels 6 bezogen - zu einer Seite parallel fortgesetzt und münden in Abstand zum Klappenflügel 6 in einen Wellenfortsatz 9, der die drei Trägerrippen 7 einstückig endseitig verbindet. Der Wellenfortsatz 9 erstreckt sich parallel zu den Längsseiten des Klappenflügels 6. Der Wellenfortsatz 9 und damit auch die Strömungsklappe 5 ist um eine Schwenkachse 8 schwenkbeweglich gelagert, die einen entsprechenden Kanalabschnitt des Strömungskanalraumes 4 etwa auf halber Breite quer zur Strömungsrichtung durchsetzt. Die Schwenkachse 8 ist in einem Abstand zu dem Klappenflügel 6 angeordnet, der wenigstens der Erstreckung des Klappenflügels 6 in der Schwenkebene und vorliegend nahezu dem Doppelten dieser Schwenkebenenerstreckung des Klappenflügels 6 entspricht.

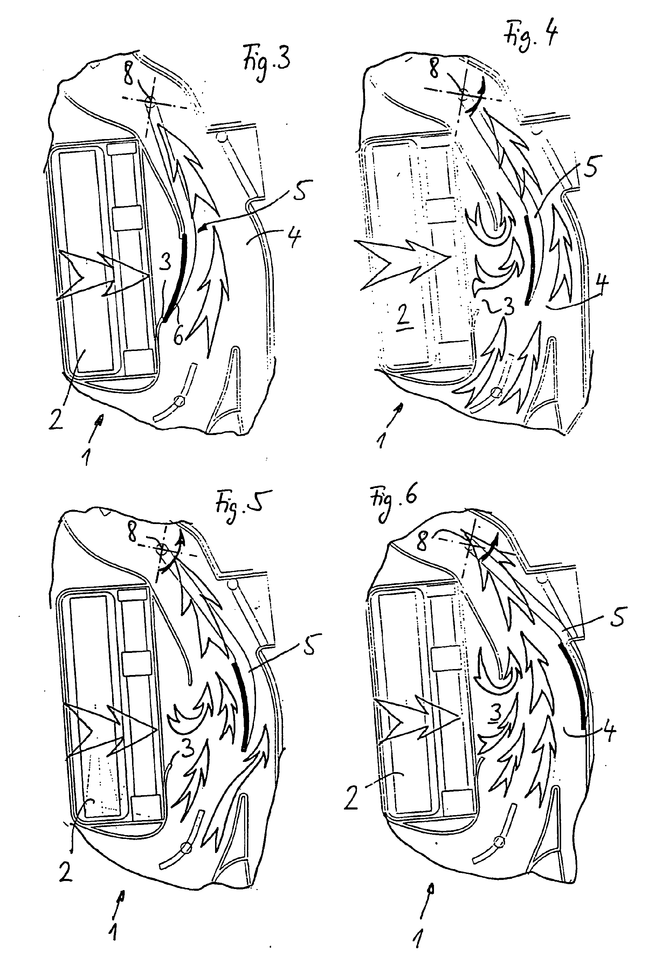

Wie insbesondere anhand der Fig. 3 bis 6 erkennbar ist, entspricht die konkave Krümmung des Klappenflügels 6 in etwa der Krümmung der Wandungsbereiche des Strömungskanalraumes 4 auf Höhe des Schwenkbereiches der Strömungsklappe 5, so dass die Strömungsklappe 5 in jedem Öffnungszustand etwa parallel zu den entsprechenden Wandungsbereichen des Strömungskanalraumes 4 ausgerichtet ist. Um die etwa parallele Verlagerung des Klappenflügels 6 zu erzielen, ist die Schwenkachse 8 in dem beschriebenen großen Abstand zu dem Klappenflügel 16 angeordnet. Hierdurch ist der für die Strömungsklappe 5 innerhalb des Strömungskanalraumes 4 zur Verfügung stehende Schwenkwinkel so klein, dass durch die Verschwenkung der Strömungsklappe 5 zwischen der Schließposition gemäß Fig. 3 und der vollständigen Öffnungsposition gemäß Fig. 6 nahezu eine parallele Verlagerung des Klappenflügels 6 erfolgt. Durch die Pfeildarstellungen sind die Luftströmungen innerhalb des Klimatisierungsgehäuses 1 erkennbar. Durch die nahezu parallele Öffnung der Strömungsklappe 5 sind im Strömungsklappenbereich nahezu keine Verwirbelungen oder Turbulenzen durch die Strömungsklappe 5 vorhanden, wodurch sich ein günstiges Strömungsbild und demzufolge nahezu keine strömungsbedingten Geräusche beim Öffnen und Schließen der Strömungsklappe 5 ergeben. Da auch die Tragrippen 7 der Trägeranordnung für den Klappenflügel 6 ein schmales, stegförmiges Profil aufweisen, das in Strömungsrichtung ausgerichtet ist, ergeben sich auch durch die Trägeranordnung keine negativen Beeinflussungen der Strömung. Der Wellenfortsatz 9 weist einen zylindrischen Außenmantel auf, so dass auch in diesem Bereich keine größeren Strömungsturbulenzen auftreten. Anhand der Fig. 6 ist erkennbar, dass der Klappenflügel 6 vollflächig an dem äußeren Wandungsabschnitt des Strömungskanalraumes 4 anliegt. In dem Wandungsabschnitt können hierzu vorzugsweise Ausbuchtungen für die Einbettung der Tragrippen 7 in dieser geöffneten Endposition vorgesehen sein, um das vollflächige Anliegen des Klappenflügels 6 zu ermöglichen. Ohne derartige Ausbuchtungen würden die Tragrippen 7 an dem Wandungsabschnitt anliegen, wodurch der Klappenflügel 6 nicht direkt an dem Wandungsabschnitt, sondern in geringem Abstand zum Wandungsabschnitt positioniert wäre.

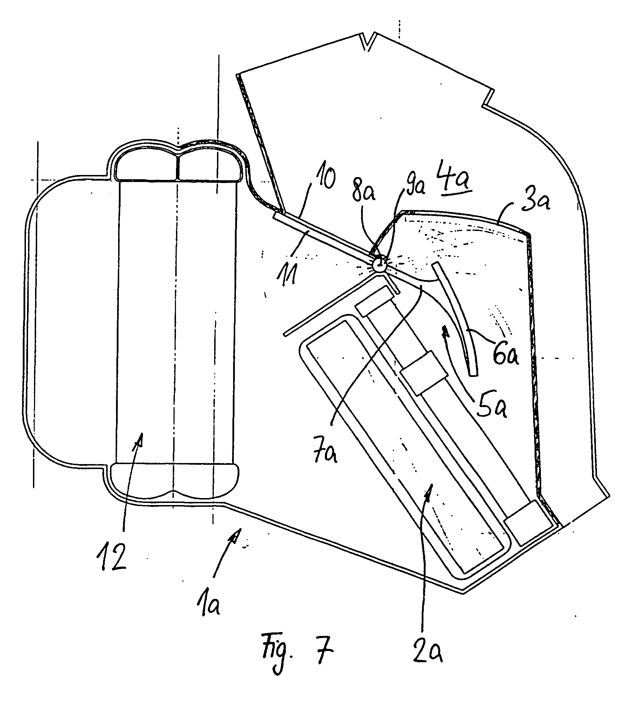

Aus Fig. 7 ist ein weiteres Klimatisierungsgehäuse 1a für eine Heizungs- und/oder Klimaanlage eines Kraftfahrzeugs ersichtlich. Bei dieser Ausführung sind in dem Klimatisierungsgehäuse zwei Wärmeübertrageranordnungen 2a und 12 vorgesehen, die in unterschiedlichen Bereichen des Klimatisierungsgehäuses 1a angeordnet sind. Ausgangsseitig der Durchströmung der Wärmeübertrageranordnungen 2a und 12 ist jeweils ein Strömungsdurchtritt 3a, 10 vorgesehen, der in den Strömungskanalraum 4a mündet. Der Strömungskanalraum 4a definiert einen Verteilerraum für die entsprechenden Austrittskanäle zum Fahrzeuginnenraum. Die beiden Strömungsdurchtritte 3a, 10 sind alternativ durch eine gemeinsame Strömungsklappe 5a in Form einer Doppelklappe verschließbar, die einen ersten Klappenflügel 6a zum Verschließen des Strömungsdurchtrittes 3a und einen zweiten Klappenabschnitt 11 zum Verschließen des Strömungsdurchtrittes 10 aufweist. Der Strömungsdurchtritt 3a weist eine - auf den die Wärmeübertrageranordnung 2a beherbergenden Gehäusebereich bezogen - konvex gekrümmten Strömungsdurchtritt 3a auf. Auch der zugehörige Klappenflügel 6a ist entsprechend konvex gekrümmt. Der Klappenflügel 6a ist mittels einer Trägeranordnung 7a und einem Wellenfortsatz 9a um eine Schwenkachse 8a schwenkbeweglich gelagert, die sich mittig zwischen den beiden Strömungsdurchtritten 3a, 10 befindet, wie anhand der Fig. 7 erkennbar ist. Der Klappenabschnitt 11 ist konventionell gestaltet, indem er sich eben und geradlinig radial von der Schwenkachse 8a weg erstreckt. Die Schwenkachse 8a ist auch unmittelbar zum Strömungsdurchtritt 10 benachbart, so dass sich ein konventionelles Öffnen und Schließen dieses Klappenabschnittes 11 ergibt. Der Klappenflügel 6a ist mittels der Trägeranordnung 7a, die ebenfalls durch mehrere parallele Rippen gebildet ist, derart schwenkbeweglich verlagerbar, dass sich wenigstens in der Öffnungsendposition des Klappenflügels 6a, in der der Klappenabschnitt 11 sich in seiner Schließposition befindet, eine im wesentlichen parallele Ausrichtung zur Durchströmung der Wärmeübertrageranordnung 2a ausgangsseitig zum Strömungsdurchtritt 3a hin ergibt. Der Klappenflügel 6a, der Wellenfortsatz 9a und der Klappenabschnitt 11 sind einstückig gestaltet, so dass ein Öffnungs- oder Schließvorgang der einen Klappenhälfte, d.h. des Klappenflügels 6a oder des Klappenabschnittes 11, zwangsläufig in einem umgekehrten Schließ- oder Öffnungsvorgang der anderen Klappenhälfte resultiert.

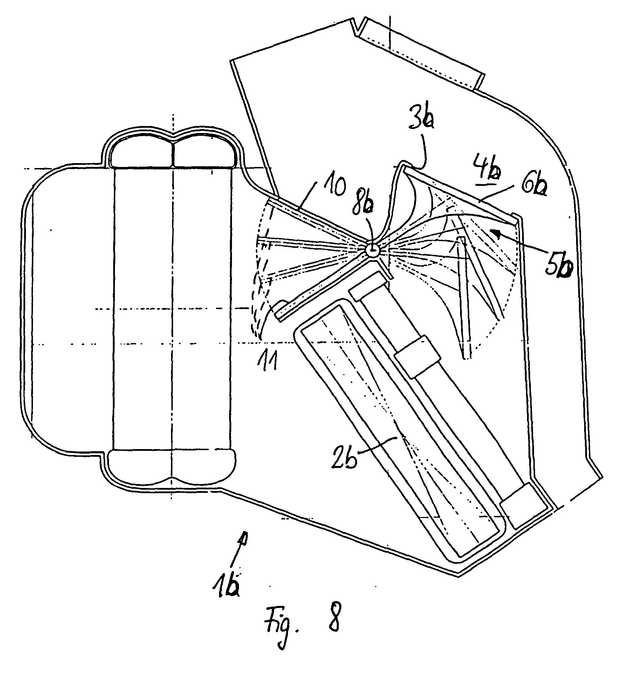

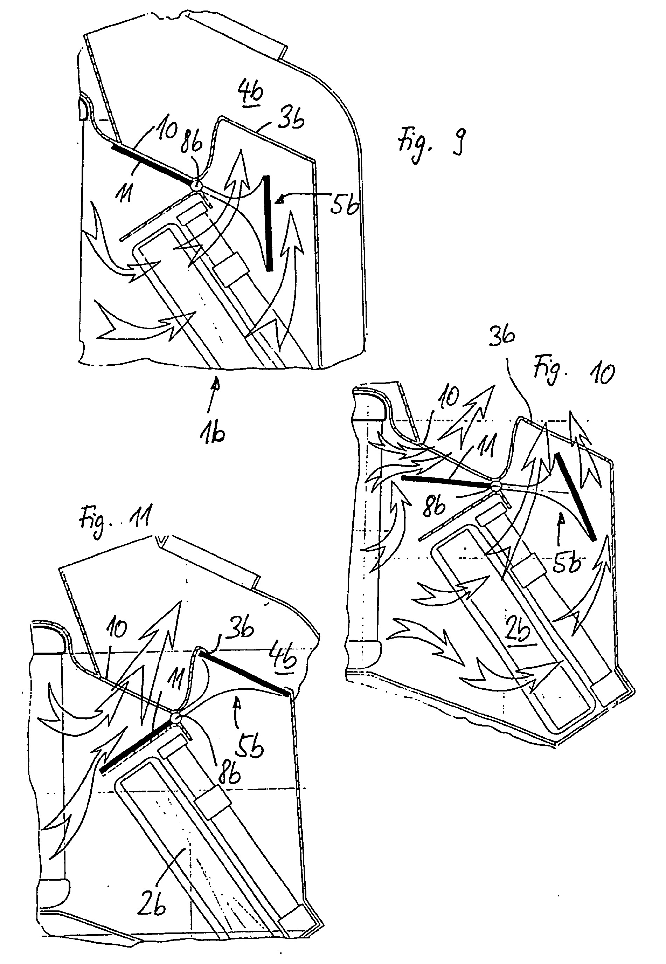

Das Ausführungsbeispiel nach den Fig. 8 bis 11 entspricht im wesentlichen dem Ausführungsbeispiel nach Fig. 7. Wesentlicher Unterschied ist es, dass beim Ausführungsbeispiel nach den Fig. 8 bis 11 der Klappenflügel 6b eben, d.h. plattenförmig, gestaltet ist und in seiner geöffneten Endposition, in der der Klappenabschnitt 11 sich in seiner Schließposition befindet, parallel zum Wandungsbereich des Strömungskanalbereiches hinter der Wärmeübertrageranordnung 3b ausgerichtet ist. Der Klappenflügel 6b verschließt den Strömungsdurchtritt 3b von der der Wärmeübertrageranordnung 2b zugewandten Seite her, d.h. der Klappenflügel 6b ist innerhalb des ausgangsseitigen Strömungskanalbereiches der Wärmeübertrageranordnung 2b angeordnet.

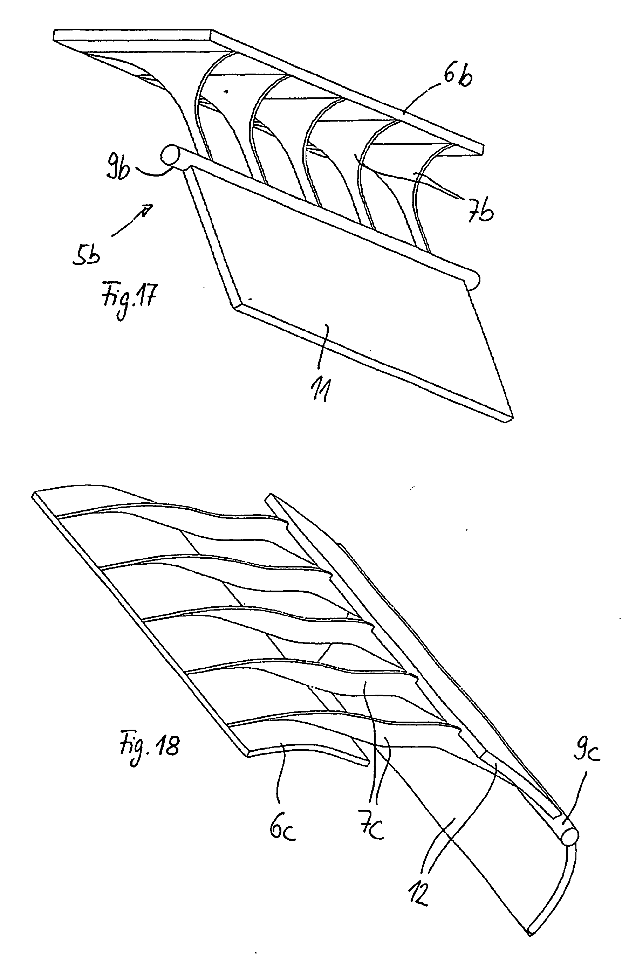

Anhand der Fig. 17 ist erkennbar, dass der plattenförmige Klappenflügel 6b durch fünf Tragrippen 7b der Trägeranordnung getragen ist, die parallel zueinander ausgerichtet sind und jeweils ein schmales, stegförmiges Profil aufweisen. Die Tragrippen 7b weisen am Übergangsbereich zum Klappenflügel 6b eine Breite auf, die der Breite des Klappenflügels 6b entspricht. Zum Wellenfortsatz 9b hin verjüngen sie sich stetig auf eine Breite, die geringer ist als der Durchmesser des Wellenfortsatzes 9b. Der Klappenabschnitt 11, der Wellenfortsatz 9b, die Tragrippen 7b und der Klappenflügel 6b sind einstückig als gemeinsames Bauteil hergestellt. Die Anordnung der Schwenkachse 8b entspricht der Anordnung der Schwenkachse 8b in Fig. 7.

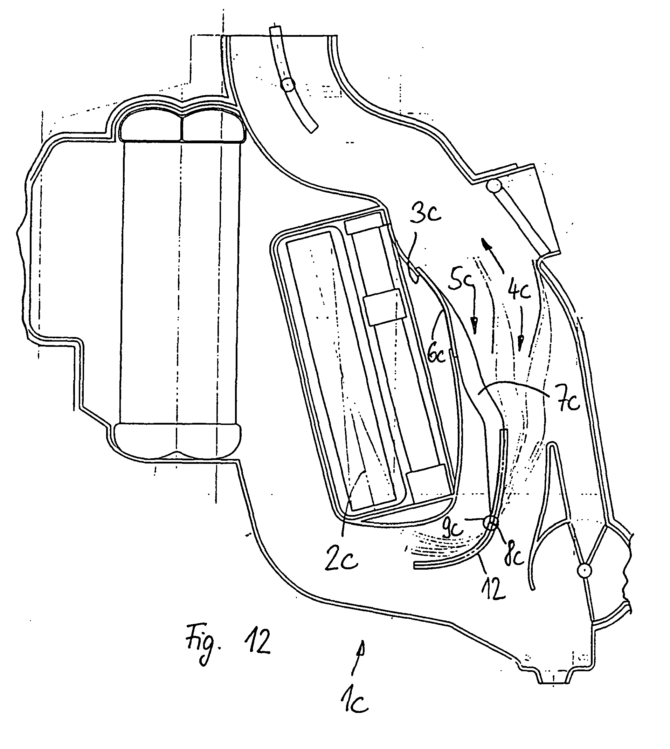

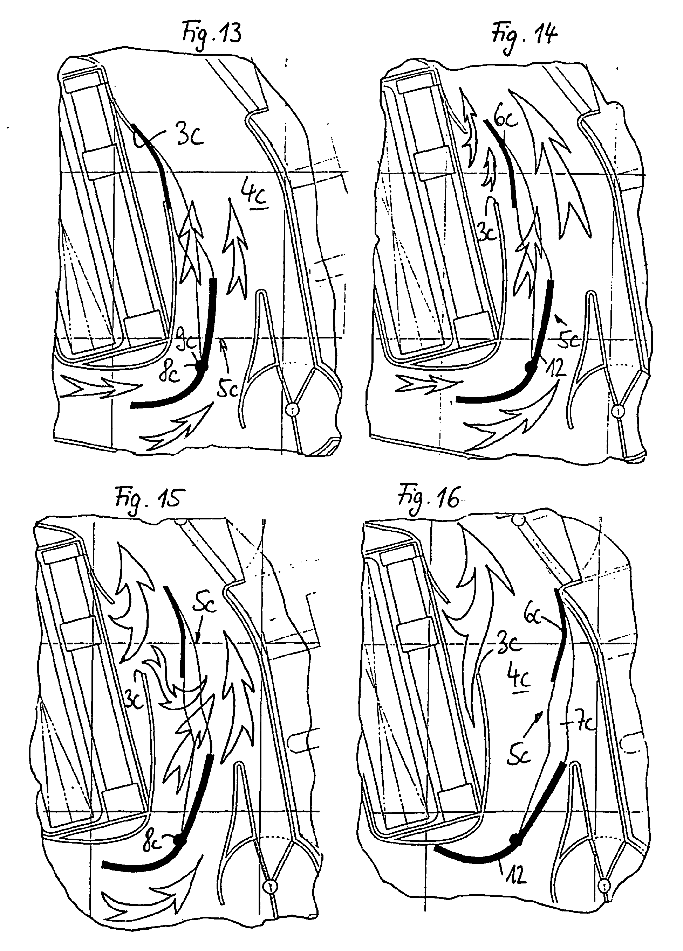

Bei der Ausführungsform nach den Fig. 12 bis 16 und 18 ist in einem Klimatisierungsgehäuse 1c für ein Kraftfahrzeug eine Strömungsklappe 5c vorgesehen, die ebenfalls als Doppelklappe ausgeführt ist. Die Strömungsklappe 5c weist zum einen einen Klappenflügel 6c auf, der ähnlich der Ausführungsform nach Fig. 1 außenseitig auf einen Strömungsdurchtritt 3c wirkt, der ausgangsseitig einer Wärmeübertrageranordnung 2c in einem entsprechenden Gehäusebereich angeordnet ist. Der Strömungsdurchtritt 3c weist eine Krümmung auf, die dem korrespondierenden Wandungsbereich des Strömungskanalraumes 4c entspricht. Auch der Klappenflügel 6c, der innerhalb des Strömungskanalraumes 4c verlagerbar ist und in der in Fig. 12 durchgezogen dargestellten Position den Strömungsdurchtritt 3c verschließt, ist entsprechend gekrümmt gestaltet. Im Unterschied zum Ausführungsbeispiel nach Fig. 1 ist der Klappenflügel 6c jedoch beim Ausführungsbeispiel nach den Fig. 12 bis 16 und 18 um eine Schwenkachse 8c gelagert, die sich in Strömungsrichtung des Strömungskanalraumes 4c vor der Mündung des Strömungsdurchtrittes 3c befindet. In entsprechender Weise ist der Klappenflügel 6c auch von einer Trägeranordnung 7c getragen, die sich entgegen der Strömungsrichtung erstreckt. Die Schwenkachse 8c ist in der Mitte des entsprechenden Strömungskanalabschnittes des Strömungskanalraumes 4c angeordnet. Auf Höhe der Schwenkachse 8c ist ein zweiter Klappenabschnitt 12 gebildet, der zu einer Hälfte in paralleler Verlängerung der korrespondierenden Wandungsbereiche des Strömungskanalraumes 4c sich in Strömungsrichtung und zur anderen Hälfte entgegen der Strömungsrichtung auf der - relativ zur Schwenkachse 8c - gegenüberliegenden Seite erstreckt. Auch diese Hälfte des Klappenabschnittes 12 ist - wie insbesondere anhand der Fig. 12 erkennbar ist - im wesentlichen entsprechend dem Wandungsbereich des Strömungskanalraumes 4c gekrümmt, der gleichzeitig auch einen Wandungsbereich des Gehäuseabschnittes bildet, der die Wärmeübertrageranordnung 2c umschließt. Durch die mittige Lagerung der Klappenabschnittes 12 ist der Klappenabschnitt 12 gemäß der in Fig. 12 sowie in den Fig. 13 bis 16 dargestellten Stellungen verschwenkbar. Da der Klappenabschnitt 12, die Trägeranordnung 7c und der Klappenflügel 6c einschließlich des Wellenfortsatzes 9c als einstückiges Bauteil gestaltet sind, sind der Klappenflügel 6c und der Klappenabschnitt 12 zwangsläufig immer gemeinsam verschwenkbar.

In der geschlossenen Position des Klappenflügels 6c ist der Klappenabschnitt 12 parallel zu dem innenliegenden Wandungsbereich des Strömungskanalraumes 4c ausgerichtet, so dass die entsprechende Luftströmung gemäß der Pfeildarstellung in Fig. 13 ungehindert innen- und außenseitig an dem Klappenabschnitt 12 vorbeiströmen kann. In der Darstellung nach Fig. 16 befindet sich der Klappenflügel 6c in seiner vollkommen geöffneten Position und der Klappenabschnitt 12 verschließt den korrespondierenden Kanalabschnitt des Strömungskanalraumes 4c. In der Öffnungsposition nach Fig. 15 ist der Klappenflügel etwa in der Mitte des Strömungskanalraumes 4c positioniert und auch der Klappenabschnitt 12 befindet sich noch etwa in der Mitte des Strömungskanalraumes 4c, so dass sich nahezu parallele Strömungsbereiche für die Luftströmung auf Höhe des Klappenflügels 6c wie auch im Bereich des Klappenabschnittes 12 ergeben.

Die Gestaltung der Strömungsklappe 5c ist anhand der Fig. 18 gut erkennbar. Der Klappenflügel 6c wird ebenfalls von fünf Tragrippen 5c der Trägeranordnung getragen, die in die vordere Hälfte des Klappenabschnittes 12 münden. Die Tragrippen 7c sind noch bis zum hohlzylindrischen Wellenfortsatz 9c fortgesetzt. Auf der den Tragrippen 7c gegenüberliegenden Seite setzt die rückseitige Hälfte des Klappenabschnittes 12 an, die stärker gekrümmt ist als die vordere Hälfte des Klappenabschnittes 12.

## Patentansprüche

1. Heizungs- und/oder Klimaanlage eines Kraftfahrzeugs mit einem Strömungskanalabschnitt und einer Strömungsklappe mit wenigstens einem Klappenflügel, der einem Strömungsdurchtritt zugeordnet ist, sowie mit Führungsmitteln zur Verlagerung des Klappenflügels zwischen einer den Strömungsdurchtritt verschließenden Schließposition und wenigstens einer Öffnungsposition, **dadurch gekennzeichet, dass** die Führungsmittel (7, 8, 9; 7c, 8c, 9c) den Klappenflügel (6, 6c) derart verlagern, dass der Klappenflügel (6, 6c) in jeder Öffnungsposition im wesentlichen parallel zu den Wandungsbereichen des Strömungskanalabschnitts ausgerichtet ist, wobei der Klappenflügel (6, 6c) in seiner Form an Verlauf und Form von Wandungsbereichen des Strömungskanalabschnittes (4, 4c) im Bereich des Strömungsdurchtrittes (3, 3c) angepasst ist.

2. Heizungs- und/oder Klimaanlage nach Anspruch 1, **dadurch gekennzeichnet, dass** der Klappenflügel (6, 6c) um eine in Abstand zu dem Klappenflügel angeordnete Schwenkachse (8, 8c) schwenkbeweglich gelagert ist, und dass der Klappenflügel mittels einer Trägeranordnung (7, 7c) mit der Schwenkachse (8, 8c) verbunden ist.

3. Heizungs- und/oder Klimaanlage nach Anspruch 2, **dadurch gekennzeichnet, dass** die Trägeranordnung (7, 7c) in Verlängerung der Kontur der Klappenflügelfläche abragt.

4. Heizungs- und/oder Klimaanlage nach Anspruch 2, **dadurch gekennzeichnet, dass** die Trägeranordnung (7, 7c) durch mehrere zueinander beabstandete Rippen gebildet ist, die in einen um die Schwenkachse gelagerten Wellenfortsatz (9, 9c) münden.

5. Heizungs- und/oder Klimaanlage nach Anspruch 1, **dadurch gekennzeichnet, dass** dem Klappenflügel (6c) im Bereich der Schwenkachse (8c) ein weiterer Klappenabschnitt (11, 12) für einen weiteren Strömungsdurchtritt zugeordnet ist.

6. Heizungs- und/oder Klimaanlage nach Anspruch 5, **dadurch gekennzeichnet, dass** der weitere Klappenabschnitt (12) gemäß der Kontur des flankierenden Strömungskanalabschnittes (4c) gekrümmt ist.

7. Heizungs- und/oder Klimaanlage nach Anspruch 6, **dadurch gekennzeichnet, dass** der weitere Klappenabschnitt (12) die Schwenkachse (8c) schneidet.

8. Heizungs- und/oder Klimaanlage nach einem der vorhergehenden Ansprüche, **dadurch gekennzeichnet, dass** der/die Klappenflügel (6, 6c; 11, 12) einschließlich Trägeranordnung (7, 7c) und Wellenfortsatz (9, 9c) als einstückiges Bauteil, insbesondere aus Kunststoff, hergestellt sind.

## Claims

1. Heating and/or air-conditioning unit of a motor vehicle, with a flow duct section and an air-flow damper having at least one damper flap associated with a flow aperture, and with guiding means for moving the damper flap between a closed position in which it blocks the flow aperture and at least one open position, **characterised in that** the said guiding means (7, 8, 9; 7c, 8c, 9c) move the damper flap (6, 6c) in such manner that in any open position the damper flap (6, 6c) is orientated substantially parallel to the wall areas of the flow duct section, and in its shape the damper flap (6, 6c) matches the course and shape of wall areas of the flow duct section (4, 4c) in the vicinity of the flow aperture (3, 3c).

2. Heating and/or air-conditioning unit according to Claim 1, **characterised in that** the damper flap (6, 6c) is mounted so as to pivot about a pivot axle (8, 8c) positioned a distance away from the damper flap, and the damper flap is connected to the pivot axle (8, 8c) by an array of supports (7, 7c).

3. Heating and/or air-conditioning unit according to Claim 2, **characterised in that** the array of supports (7, 7c) projects as an extension of the contour of the damper flap surface.

4. Heating and/or air-conditioning unit according to Claim 2, **characterised in that** the array of supports (7, 7c) is formed by a plurality of fins spaced a distance apart from one another, which end at an axle extension (9, 9c) fitted around the pivot axle.

5. Heating and/or air-conditioning unit according to Claim 1, **characterised in that** a further damper section (11, 12) for a further flow aperture is associated with the damper flap (6c) in the area of the pivot axle (8c).

6. Heating and/or air-conditioning unit according to Claim 5, **characterised in that** the said further damper section (12) is curved to match the contour of the flanking flow duct section (4c).

7. Heating and/or air-conditioning unit according to Claim 6, **characterised in that** the further damper section (12) intersects the pivot axle (8c).

8. Heating and/or air-conditioning unit according to any of the preceding claims, **characterised in that** the damper flap(s) (6, 6c; 11, 12), including the array of supports (7, 7c) and the axle extension (9, 9c), are made integrally as one component, in particular of plastic.

## Revendications

1. Système de chauffage et / ou de climatisation d'un véhicule automobile, comprenant une partie de conduit d'écoulement et un volet d'écoulement comportant au moins une ailette de volet qui est associée à un passage d'écoulement, ainsi que des moyens de guidage servant au positionnement de l'ailette de volet entre une position de fermeture obturant le passage d'écoulement et au moins une position d'ouverture,
**caractérisé en ce que** les moyens de guidage (7, 8, 9 ; 7c, 8c, 9c) positionnent l'ailette de volet (6, 6c), de manière telle que l'ailette de volet (6, 6c), dans chaque position d'ouverture, soit orientée sensiblement de façon parallèle aux zones de paroi de la partie du conduit d'écoulement, où l'ailette de volet (6, 6c), dans la zone du passage d'écoulement (3, 3c), est adaptée, dans sa forme, au profil et à la forme de zones de paroi de la partie du conduit d'écoulement (4, 4c).

2. Système de chauffage et / ou de climatisation selon la revendication 1, **caractérisé en ce que** l'ailette de volet (6, 6c) est montée de façon mobile, en pivotant autour d'un axe de pivotement (8, 8c) disposé à distance de l'ailette de volet, et **en ce que** l'ailette de volet est reliée à l'axe de pivotement (8, 8c) par un dispositif support (7, 7c).

3. Système de chauffage et / ou de climatisation selon la revendication 2, **caractérisé en ce que** le dispositif support (7, 7c) dépasse dans le prolongement du contour de la surface de l'ailette du volet.

4. Système de chauffage et / ou de climatisation selon la revendication 2, **caractérisé en ce que** le dispositif support (7, 7c) est formé par plusieurs ailettes, espacées les unes des autres, qui débouchent dans un prolongement ondulé (9, 9c) monté autour de l'axe de pivotement.

5. Système de chauffage et / ou de climatisation selon la revendication 1, **caractérisé en ce qu'**une autre partie de volet (11, 12) est affectée, pour un autre passage de l'écoulement, à l'ailette de volet (6c) dans la zone de l'axe de pivotement (8c).

6. Système de chauffage et / ou de climatisation selon la revendication 5, **caractérisé en ce que** l'autre partie de volet (12) est recourbée conformément au contour de la partie contiguë (4c) du conduit d'écoulement.

7. Système de chauffage et / ou de climatisation selon la revendication 6, **caractérisé en ce que** l'autre partie de volet (12) coupe l'axe de pivotement (8c).

8. Système de chauffage et / ou de climatisation selon l'une quelconque des revendications précédentes, **caractérisé en ce que** l'ailette ou les ailettes de volet (6, 6c ; 11, 12), y compris le dispositif support (7, 7c) et le prolongement ondulé (9, 9c), sont fabriqués comme un composant formant une seule et même pièce réalisée en particulier en matière plastique.
